# EUROPEAN PATENT APPLICATION

(11) **EP 2 375 231 A1**
(43) Date of publication of application: **12.10.2011**
(21) Application number: 10158992.7
(22) Date of filing: 01.04.2010
(51) Int. Cl.: G01J 9/00

(54) **Turbulence Compensation.**

(71) Applicant: Nederlandse Organisatie voor Toegepast -Natuurwetenschappelijk Onderzoek TNO, 2628 VK Delft (NL)
(72) Inventor: Klamer, Schutte, 2725 ES Zoetermeer (NL)
(74) Representative: Hatzmann, Martin

(57) **Abstract**

A device for producing turbulence compensated images comprises a processor (1), a memory (2) for storing processor-executable instructions, a camera (3) for producing images, and an adaptive optical element (4) for altering properties of light incident on the camera (3). The processor (1) is configured to control the adaptive optical element (4), while the processor-executable instructions are configured to make the processor carry out the steps of:
• registering a series of images produced by the camera (3) while adapting the optical element (4), thus registering images having different optical properties,
• estimating any turbulence affecting the images by interpolating the registered series of images, and
• compensating any turbulence in at least one image by using the estimated turbulence and a turbulence compensation algorithm.

The processor-executable instructions may be configured for carrying out a phase diversity technique, and/or a compressive sensing technique.

## Description

The present invention relates to turbulence compensation. More in particular, the present invention relates to a device for and a method of producing a turbulence compensated image.

It is well known that atmospheric turbulence can deteriorate the quality of images. Turbulence influences the path of light and causes images to be locally out-of-focus. Turbulence may also have other detrimental effects on images, for example scintillation. Various solutions have been proposed to compensate turbulence. Most of these solutions involve feedback: the amount of turbulence detected in an image is used to alter the light path and thus reduce the turbulence.

United States Patent US 6 163 381 (TRW) discloses a dual sensor wave front correction system comprising a real reconstructor which provides an estimation of the distortion in the wave front during most conditions, except for conditions of severe turbulence, for which a complex reconstructor is provided. The reconstructors provide a composite correction signal to the actuators of a deformable mirror. This known correction system produces a corrected light beam by attempting real time feedback.

The paper "Imaging through turbulence using compressive coherence sensing" by A.A. Wagadarikar et al. discloses an imaging technique in which sparse objects imaged through turbulence are estimated. The Wagadarikar paper suggests to use a deformable mirror in an adaptive optics system to remove any aberrations caused by the turbulence. In other words, feedback is used to produce an improved image.

Although the above techniques are useful, it has been found that feedback may introduce problems. If the feedback is delayed, the image compensation is incorrect and the distortions caused by turbulence are not removed. In addition, inaccuracies in the feedback loop may introduce oscillations, which also lead to image errors.

It is an object of the present invention to overcome these and other problems of the Prior Art and to provide a device for and method of producing turbulence compensated images from which a feedback loop can be omitted.

Accordingly, the present invention provides a device for producing turbulence compensated images, the device comprising:
- a processor,
- a memory for storing processor-executable instructions,
- a camera for producing images, and
- an adaptive optical element for altering properties of light incident on the camera,
wherein the processor is configured to control the adaptive optical element, and wherein the processor-executable instructions are configured to make the processor carry out the steps of:
- registering a series of images produced by the camera while adapting the optical element, thus registering images having different optical properties,
- estimating any turbulence affecting the images by interpolating the registered series of images, and
- compensating any turbulence in at least one image by using the estimated turbulence and a turbulence compensation algorithm.

By registering a series of images having different optical properties, each presumably being affected by a different turbulence state of the atmosphere, the actual turbulence can be estimated by interpolation. Using this estimated actual turbulence, the processor can compensate at least one image, typically but not necessarily the "best" image in terms of focus and other properties.

It is noted that the present invention does not attempt to capture a better (that is, turbulence compensated) image as in the Prior Art, where the adaptive optical element serves to compensate the image before it is captured by the camera. In the present invention, the image is compensated after being captured by the camera, and the adaptive optical element serves to introduce distortions rather than eliminating them.

In a preferred embodiment, the processor-executable instructions are configured for estimating turbulence using a phase diversity technique. Such techniques allow turbulence to be estimated effectively.

Alternatively, or additionally, the processor-executable instructions may be configured for carrying out the step of compensating turbulence using a compressive sensing technique. Compressive sensing is a technique which allows information to be reconstructed from a low number of samples, typically significantly less samples than required according to the Nyquist/Shannon criterion. Reference is made to the article by Emmanuel Candès and Michael Wakin, "An introduction to compressive sampling", IEEE Signal Processing Magazine, 25(2), pp. 21 - 30, March 2008, which is herewith incorporated in this document.

Alternatively, or additionally, the processor-executable instructions may be configured for carrying out the step of compensating turbulence using a suitable interpolation technique.

The processor-executable instructions may further be configured for making the adaptive optical element produce an image space which comprises the optimal configuration of the adaptive optical element. It will be understood that the image space (with the word "space" being used in the mathematical sense) is produced by a plurality of (preferably distinct) images.

The adaptive optical element may comprise a deformable mirror, which is known *per se.*

The present invention may be summarised as follows. The device of the present invention comprises an adaptive optical element, such as a deformable mirror, of which the optical properties are varied in time. Varying the optical properties of the adaptive optical element results in variations, such as variations in focus, of the images. The adaptive optical element may produce random variations, or may produce dedicated variations. The images resulting from the variations are used to estimate the current turbulence. At least one image is compensated using the estimated turbulence. Estimating the turbulence may be achieved using a phase diversity interpolation technique which may be known *per se* (see, for instance, "Evaluation of Phase-Diversity Techniques for Solar-Image Restoration" by Paxman et al., Astrophysical Journal, 1996). The present invention uses no feedback about the current turbulence of the atmosphere

It is noted that United States Patent Application US 2010/001901 (William M. Rice University) discloses a method and apparatus for developing radar scene and target profiles based on the compressive sensing concept. The radar reflectivity profile is recovered from the received radar wave sequence using a compressible or sparse representation of the radar reflectivity profile, in combination with knowledge of the outgoing wave form. US 2010/001901 fails to suggest the use of compressive sensing in optical applications and also fails to mention turbulence compensation.

The present invention also provides a method of producing turbulence compensated images, the method comprising the steps of:
- registering a series of images while adapting an optical element so as to alter properties of light incident on a camera, thus registering images having different optical properties,
- estimating any turbulence affecting the images by interpolating the registered series of images, and
- compensating any turbulence in at least one image by using the estimated turbulence and a turbulence compensation algorithm.

In a preferred embodiment, the step of estimating turbulence may involves a phase diversity technique. The step of compensating turbulence may involve a compressive sensing technique. The adaptive optical element may produces an image space which comprises the optimal configuration of the adaptive optical element.

In the present invention, it is preferred that the adaptive optical element is controlled without feedback. That is, turbulence estimates are not used for controlling the adaptive optical element, as in the Prior Art. The method of the present invention is therefore preferably feedbackless.

The present invention additionally provides a computer program product comprising processor-executable instructions for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:
Fig. 1 schematically shows an embodiment of a device according to the present invention.
Fig. 2 schematically shows an embodiment of an adaptive optical element in cross-sectional view.

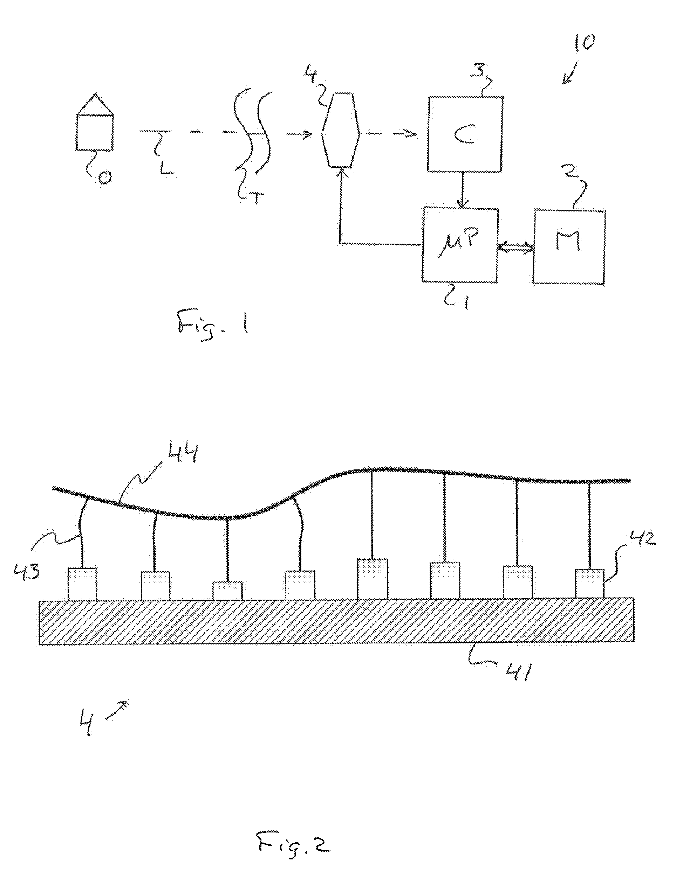

The device 10 shown merely by way of non-limiting example in Fig. 1 comprises a processor 1, a memory 2, a camera 3 and an adaptive optical element 4. The processor 1 may be constituted by a commercially available microprocessor (µP). The memory (M) 2 may be constituted by commercially available RAM (Random Access Memory) and stores both data and processor-executable instructions. There are several categories of instructions (that is, several software programs) stored in the memory 2: instructions to control the adaptive optical element 4, instructions to control the camera 3, instructions to estimate turbulence and instructions to compensate turbulence. The device 10 may further comprise a display screen (not shown) and/or a keyboard or other input/output apparatus.

The camera (C) 3 may be a commercially available CCD camera or similar device. The camera 3 captures digital images based on impinging light L and sends these digital images to the processor 1, where they are processed and stored in the memory 2.

The adaptive optical element 4 is preferably constituted by a deformable mirror, which may be known *per se.* Suitable deformable mirror designs are disclosed in WO 2005/050283 (TNO) and US 5 719 846 (Sharp).

As shown in Fig. 1, light L originating from an object O passes through (and/or is reflected by) the adaptive optical element 4 of the device 10. Between the object O and the adaptive optical element 4, the light experiences atmospheric turbulence T (symbolically illustrated in Fig. 1 by curved lines in the light path). The camera 3 captures the image of the object O and produces digital signals representing this image, which digital signals are forwarded to the processor 1. However, the image of the object O will not be perfect, as it is affected by both the turbulence T and the adaptive optical element 4.

According to an important aspect of the present invention, the adaptive optical element is varied by the processor 1 so as to provide, in different images, different distortions, such as different degrees of being out-of-focus (either locally, in parts of the image, or globally, in the entire image). Although some images may be produced having identical settings of the adaptive optical element 4, it is preferred that all images, at least all images of a series, are produced using distinct setting, thus leading to distinct distortions induced by the adaptive optical element (it will be understood that image distortions induced by atmospheric turbulence and image distortions induced by the adaptive optical element may cancel each other, at least partially, thus accidentally leading to identical overall image distortions in different images). The adaptations of the optical element 4, and hence the image distortions, may be random. However, they may also follow a predetermined pattern. The series of images having different induced distortions is used to estimate the distortion induced by the atmospheric turbulence. This typically requires a large number of images.

In order to significantly reduce the number of images required to estimate (the image distortions induced by) the atmospheric turbulence, the present invention advantageously uses compressed sensing techniques. Such techniques, which are also known as sparse sampling techniques, are capable of reconstructing data using far less samples than required by the Nyquist / Shannon criterion. According to this criterion, the sampling frequency should be at least half the highest frequency in a signal if that signal is to be fully reconstructed from the samples. In other words, the number of signal samples is determined by the highest frequency of the signal (the CD, for example, uses 44100 samples per second to faithfully render sound of up to 20 kHz). However, sparse sampling techniques, which are known *per se,* utilize additional information about the signal to fully reconstruct it while using far less samples. Thus, according to the present invention, additional information about the images can be used to significantly reduce the number of images used to estimate the distortion, in particular when the settings of the adaptive optical element are varied randomly. This additional information may be derived from other images in a series: if the images are captured in a relatively rapid succession, and if the object does not move relative to the camera, the only differences between the images will be caused by the different distortions. If one part of the distortions is known, as it is induced by the processor-controlled adaptive optical element, the atmospheric distortion can be estimated.

It is noted that the techniques used in the present invention may be known *per se* and may be, as such, available as commercial software programs. For example, a turbulence compensation algorithm may be known *per se,* and may use a known compressive sensing technique. In addition, estimating the amount of turbulence may be carried out using a known phase diversity technique.

Compensating turbulence may be carried out by interpolation, provided that images are available "around" the (virtual) distortion-free image, and provided that an indication exists of the relative position of this distortion-free image relative to the available images. In other words, a measure should be derived of the amount of distortion in each image. Part of this measure will of course be based on the (processor-controlled) settings of the adaptive optical element, and part of this measure will have to be estimated, for example by averaging a number of images while compensating the settings of the adaptive optical element.

A merely exemplary embodiment of a deformable mirror, which may serve as adaptive optical element 4, is illustrated in Fig. 2. In the embodiment of Fig. 2, the deformable mirror comprises a support structure 41 upon which a series of actuators 42 are mounted. The actuators 42 can preferably be controlled individually. Elastic connections 43 connect each actuator 42 to a flexible optical membrane 44. It can be seen that selective deformations of the optical membrane 44, effected by the actuators 42, result in certain deformations of the image produced by the light (L in Fig. 1). In this way, the image can be deliberately, and in a controlled manner, be distorted, so as to produce a series of differently distorted images. These images can then be used for interpolation, to determine the actual turbulence.

The present invention is based upon the insight that by interpolation of several images affected differently by turbulence, the actual turbulence can be estimated, for example by using phase diversity techniques. The present invention benefits from the further insight that turbulence compensation can be synthesized on the basis of a sparsely sampled turbulence compensation configuration space using compressive sensing or similar techniques.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A device for producing turbulence compensated images, the device comprising:
• a processor (1),
• a memory (2) for storing processor-executable instructions,
• a camera (3) for producing images, and
• an adaptive optical element (4) for altering properties of light incident on the camera (3),
wherein the processor (1) is configured to control the adaptive optical element (4), and wherein the processor-executable instructions are configured to make the processor carry out the steps of:
• registering a series of images produced by the camera (3) while adapting the optical element (4), thus registering images having different optical properties,
• estimating any turbulence affecting the images by interpolating the registered series of images, and
• compensating any turbulence in at least one image by using the estimated turbulence and a turbulence compensation algorithm.

2. The device according to claim 1, wherein the processor-executable instructions are configured for estimating turbulence using a phase diversity technique.

3. The device according to claim 1 or 2, wherein the processor-executable instructions are configured for carrying out the step of compensating turbulence using a compressive sensing technique.

4. The device according to claim 1 or 2, wherein the processor-executable instructions are configured for carrying out the step of compensating turbulence using an interpolation technique.

5. The device according to any of the preceding claims, wherein the processor-executable instructions are configured for making the adaptive optical element (4) produce an image space which comprises the optimal configuration of the adaptive optical element (4).

6. The device according to any of the preceding claims, wherein the adaptive optical element (4) comprises a deformable mirror.

7. The device according to any of the preceding claims, further comprising a display screen for displaying the turbulence corrected image.

8. A method of producing turbulence compensated images, the method comprising the steps of:
• registering a series of images while adapting an adaptive optical element (4) so as to alter properties of light incident on a camera (3), thus registering images having different optical properties,
• estimating any turbulence affecting the images by interpolating the registered series of images, and
• compensating any turbulence in at least one image by using the estimated turbulence and a turbulence compensation algorithm.

9. The method according to claim 8, wherein the step of estimating turbulence involves a phase diversity technique.

10. The method according to claim 8 or 9, wherein the step of compensating turbulence involves a compressive sensing technique.

11. The method according to claim 8, 9 or 10, wherein the adaptive optical element (4) produces an image space which comprises the optimal configuration of the adaptive optical element (4).

12. The method according to any of claims 8-11, wherein the adaptive optical element (4) is controlled without feedback.

13. A computer program product comprising processor-executable instructions for carrying out the method according to any of claims 8-12.
